# FASCICULE DE BREVET EUROPEEN

(11) **EP 1 205 377 B1**
(45) Date de publication et mention de la délivrance du brevet: **11.10.2006**
(21) Numéro de dépôt: 01402899.7
(22) Date de dépôt: 12.11.2001
(51) Int. Cl.: B62D 25/02, B62D 29/00, B62D 25/04

(54) **Flanc de carrosserie de véhicule automobile**
Karosserieseitenteil für ein Kraftfahrzeug
Automotive vehicle body side

(30) Priorité: 14.11.2000 FR 0014649
(43) Date de publication de la demande: 15.05.2002
(73) Titulaire: Peugeot Citroen Automobiles SA, 92200 Neuilly sur Seine (FR)
(72) Inventeur: Masson, Patrick Jean, 92500 Rueil-Malmaison (FR)
(74) Mandataire: Lanceplaine, Jean-Claude

(56) Documents cités:
- EP-A- 0 570 150
- EP-A- 1 040 984
- DE-A- 4 014 385
- DE-A- 19 519 779
- DE-A- 19 538 844
- FR-A- 2 800 697
- US-A- 4 826 238
- US-A- 5 765 906
- US-A- 6 092 865

## Description

La présente invention est relative à un flanc de carrosserie de véhicule automobile.

Les ossatures des flancs de véhicule automobile sont formées par plusieurs éléments mécaniques de carrosserie qui déterminent au moins une ouverture destinée à recevoir une porte du véhicule.

Les éléments comprennent un arc de pavillon, un longeron de bas de caisse et un montant central reliant cet arc de pavillon à ce longeron. Les extrémités avant de l'arc de pavillon et du longeron sont reliées entre elles par une doublure d'aile avant et par un renfort de pied avant et les extrémités arrière dudit arc de pavillon et dudit longeron sont reliées entre elles par une doublure d'aile arrière et par un passage de roue arrière de façon à former une structure rigide.

Ces différents éléments sont le plus souvent réalisés par emboutissage d'une tôle en acier et reliés les uns aux autres par des pièces de liaison, comme par exemple des goussets ou des équerres soudés sur lesdits éléments.

Or, l'emboutissage de ces éléments nécessite des outils coûteux à la fois en raison des grandes dimensions et de la complexité des pièces du fait qu'elles doivent répondre aux critères de chocs de plus en plus sévères.

Par ailleurs, la tendance actuelle des constructeurs de véhicules automobiles est de réduire le poids de ces véhicules.

Pour cela, une des solutions envisagées consiste à utiliser des tôles d'acier de plus en plus minces, ainsi que des tôles à hautes limites élastiques, ce qui pose des problèmes connexes d'emboutissage et de résistance mécanique.

Un exemple est représenté par le flanc de carrosserie décrit dans le document DE-A- 195 19779, qui couvre le préambule de la revendication 1.

L'invention a pour but d'éviter ces inconvénients en proposant un flanc de carrosserie de véhicule automobile qui permet une diminution notable du poids de l'ensemble des éléments composant ce flanc, tout en conservant au moins inchangée la résistance structurelle de cet ensemble ou en l'accroissant comparativement aux flancs utilisés jusqu'à présent.

L'invention a donc pour objet un flanc de carrosserie de véhicule automobile, du type comprenant au moins une ouverture délimitée par un arc de pavillon, un longeron de bas de caisse et un montant central, caractérisé en ce que l'arc de pavillon, le longeron et le montant central sont formés chacun par une pièce monobloc en aluminium ou ses alliages et en ce que le montant central est fixé directement sur l'arc de pavillon et le longeron et l'arc de pavillon et le longeron sont fixés directement sur des éléments adjacents de la carrosserie.

Selon d'autres caractéristiques de l'invention :
- la pièce monobloc de l'arc de pavillon est formée par un profilé obtenu par hydroformage et présentant des portions de section variable en fonction de la rigidité à obtenir dans des zones déterminées,
- le profilé est cintré et comporte une partie centrale creuse à section fermée et bordée de deux feuillures d'appui ou de fixation des éléments adjacents de la carrosserie,
- les feuillures du profilé sont fixées sur lesdits éléments par des points de soudure réalisés au moyen d'un faisceau laser,
- la pièce monobloc du longeron de bas de caisse est formée par un profilé présentant, sur sa longueur, des portions d'épaisseur variable en fonction de la rigidité à obtenir dans des zones déterminées,
- le profilé comporte une partie centrale creuse à section fermée et délimitée d'un côté par une paroi sensiblement plane prolongée, sur chacun de ses bords latéraux, par une feuillure d'appui ou de fixation des éléments adjacents de la carrosserie,
- les feuillures du profilé sont fixées sur lesdits éléments par des rivets,
- le profilé est réalisé par profilage ou hydroformage ou extrusion,
- la pièce monobloc du montant central est réalisée par fonderie et présente une section transversale en forme de U dont la branche centrale est prolongée à chaque extrémité par une semelle de fixation respectivement sur l'arc de pavillon et le longeron,
- la section transversale de la pièce monobloc du montant central varie sur sa longueur,
- ladite section transversale croît de l'extrémité de ladite pièce fixée sur l'arc du pavillon jusqu'à l'extrémité fixée sur le longeron,
- la pièce monobloc du montant central est fixée sur l'arc de pavillon et le longeron du côté de l'habitacle du véhicule,
- la semelle de la pièce monobloc du montant central est fixée sur l'arc de pavillon et le longeron par des points de soudure réalisés par un procédé de soudage de type MIG.

Les caractéristiques et avantages de l'invention apparaîtront au cours de la description qui va suivre, donnée à titre d'exemple et faite en référence aux dessins annexés, sur lesquels :
- la Fig. 1 est une vue schématique en perspective d'un flanc de véhicule automobile, conforme à l'invention,

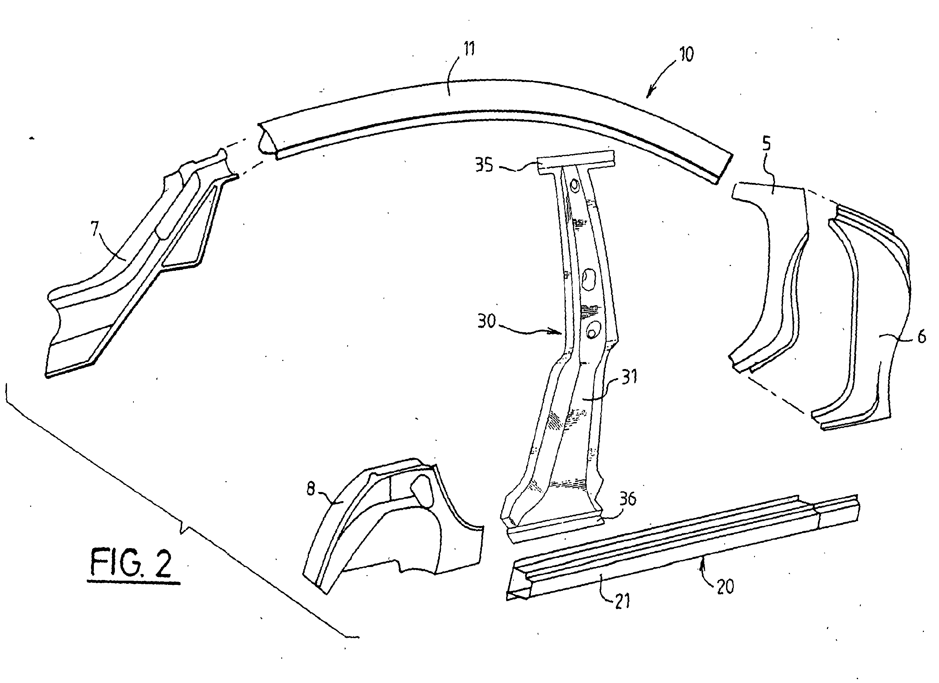

- la Fig. 2 est une vue schématique en perspective éclatée du flanc représenté à la Fig. 1,
- la. Fig. 3 est une schématique en perspective d'un arc de pavillon du flanc conforme à l'invention,
- les Figs. 4, 5 et 6 sont des vues en coupe transversale respectivement selon les lignes 4-4, 5-5 et 6-6 de la Fig. 3,
- la Fig. 7, est une vue schématique en perspective d'un longeron de bas de caisse du flanc conforme à l'invention,
- la Fig. 8 est une vue schématique en perspective de la face externe d'un montant central du flanc conforme à l'invention,
- la Fig. 9 est une vue schématique en perspective de la face interne du montant central du flanc conforme à l'invention.

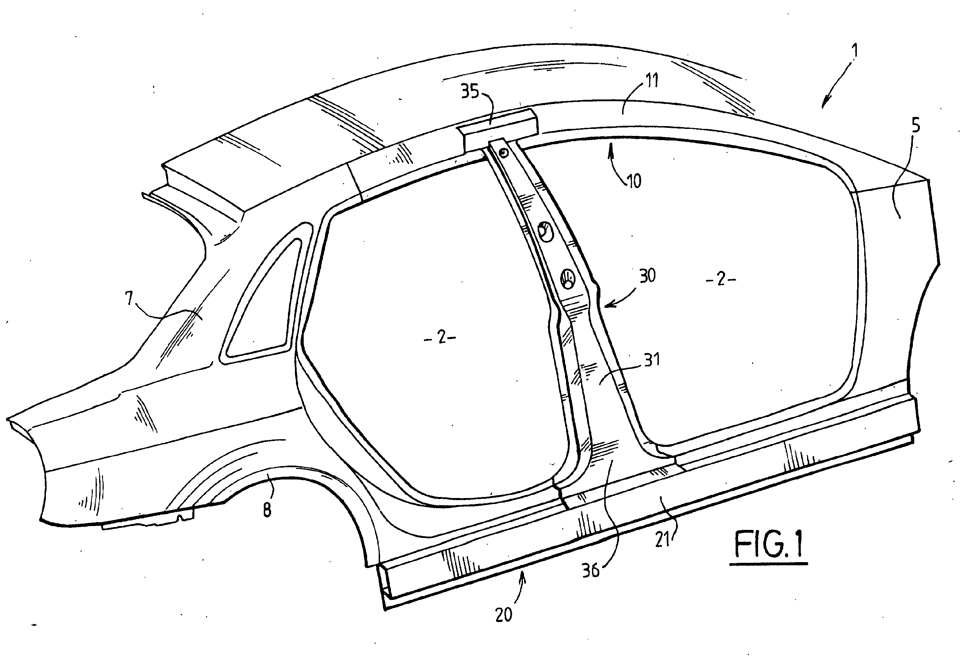

Sur la Fig. 1, on a représenté schématiquement un flanc 1 de carrosserie de véhicule automobile.

Le flanc 1 comporte au moins une ouverture et dans l'exemple de réalisation représenté à la Fig. 1, le flanc 1 comporte deux ouvertures 2 destinées à recevoir les portes du véhicule.

Ces ouvertures 2 sont délimitées, en partie supérieure, par un arc de pavillon 10, en partie inférieure par un longeron de bas de caisse 20 et en partie médiane par un montant central 30.

Les extrémités avant de l'arc de pavillon 10 et du longeron 20 sont reliées entre elles par une doublure d'aile avant 5 et par un renfort de pied avant 6 et les extrémités arrière dudit arc de pavillon 10 et dudit longeron 20 sont reliées entre elles par une doublure d'aile arrière 7 et par un passage de roue arrière 8 de façon à former une structure rigide.

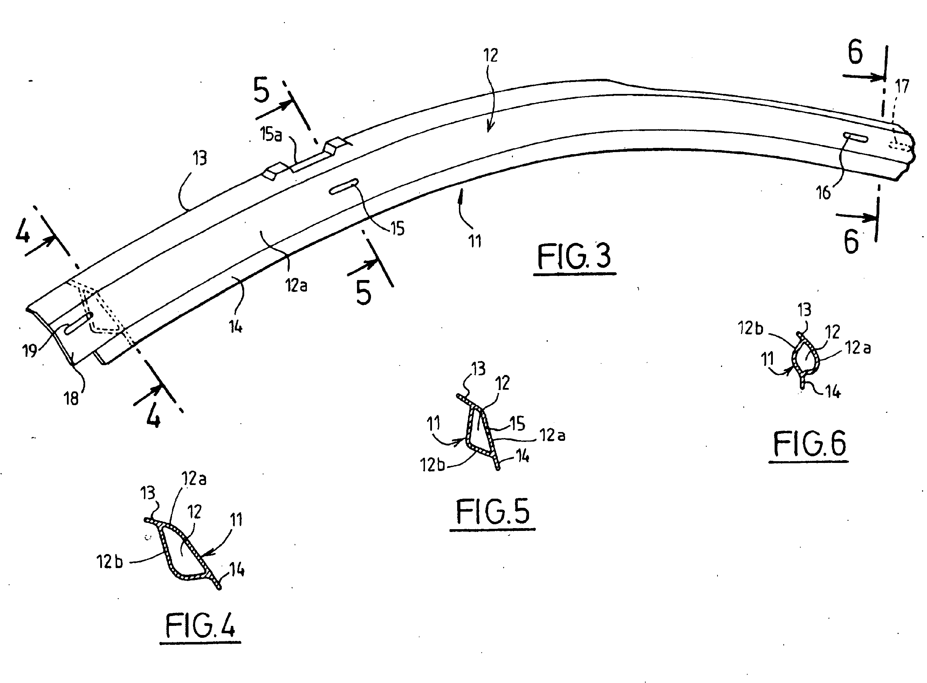

En se reportant maintenant aux Figs. 3 à 6, on va décrire l'arc de pavillon 10.

Cet arc de pavillon 10 est formé par une pièce monobloc comportant un profilé 11 en aluminium ou ses alliages obtenu par hydroformage et présentant des portions de section variable en fonction de la rigidité à obtenir dans des zones déterminées.

Le profilé 11 est cintré et comporte une partie centrale 12 à section creuse fermée et bordée de deux feuillures, respectivement 13 et 14, d'appui ou de fixation des éléments adjacents de la carrosserie, comme par exemple le pavillon.

Le fait de réaliser l'arc de pavillon 10 par hydroformage permet d'obtenir un profilé 11 qui présente des portions de section variable en fonction de la rigidité à obtenir dans des zones déterminées.

En effet, et comme représenté sur les Figs. 4, 5 et 6, la section du profilé 11 diminue de l'arrière vers l'avant du véhicule automobile.

La partie centrale 12 du profilé 11 comporte deux parois opposées 12a et 12b et la paroi 12 est munie d'une lumière 15 de positionnement du montant central 30.

Par ailleurs, les deux parois 12a et 12b opposées de la partie centrale 12 du profilé 11 comportent, à leur extrémité avant, chacune une lumière 16 et 17 de positionnement des éléments adjacents de la carrosserie.

A l'extrémité arrière du profilé 11, la paroi 12a de la partie centrale 12 se prolonge par une semelle 18 sur laquelle est prévue une lumière 19 de positionnement d'un élément adjacent de la carrosserie.

De plus, la paroi 12a de la partie centrale 12 du profilé 11 située côté de la l'habitacle du véhicule peut également comporter une échancrure 15a permettant le centrage de l'extrémité supérieure du montant central 30 sur l'arc du pavillon 10.

Les feuillures 13 et 14 du profilé 11 sont fixées sur les éléments adjacents de la carrosserie par des points de soudure réalisés au moyen d'un faisceau laser.

Les variations de forme de l'arc de pavillon 10 obtenu par hydroformage permettent une meilleure intégration de cet arc de pavillon dans le style du véhicule automobile.

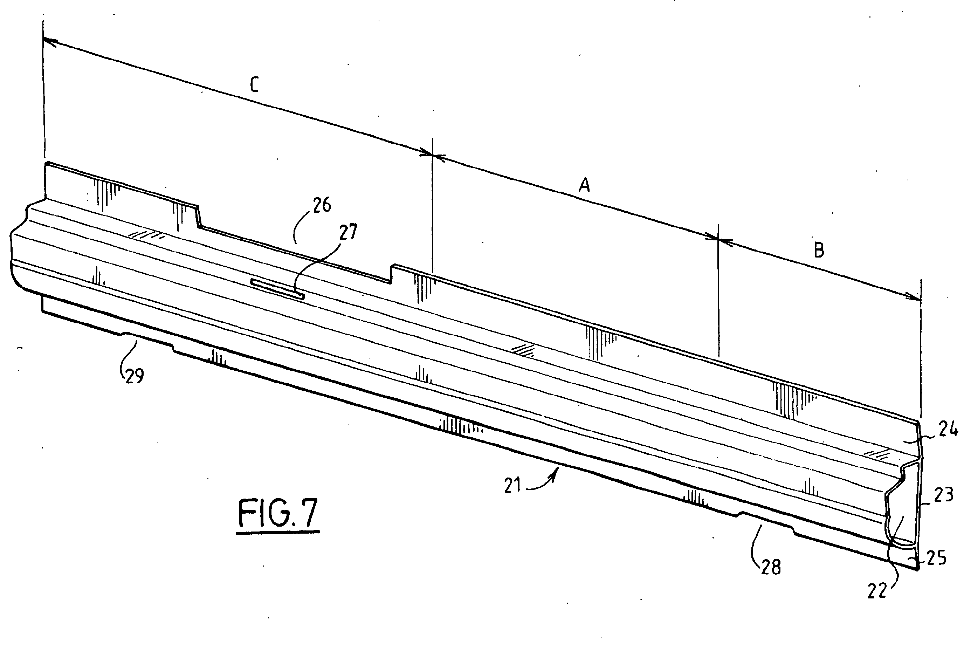

En se reportant maintenant à la Fig. 7, on va décrire le longeron de bas de caisse 20.

Ce longeron 20 est formé par une pièce monobloc comportant un profilé 21 en aluminium ou ses alliages présentant, sur sa longueur, des portions d'épaisseur variable en fonction de la rigidité à obtenir dans des zones déterminées.

Par exemple, le profilé 21 comporte une zone intermédiaire A où l'épaisseur des parois est inférieure à l'épaisseur des parois du profilé 21 dans les zones B et C situées de part et d'autre de cette zone intermédiaire A.

A titre d'exemple, dans la zone A les parois du profilé 21 ont une épaisseur de 1,7 mm et dans les zones B et C les parois de ce profilé 21 ont une épaisseur de 2,2mm.

Le profilé 21 comporte une partie centrale 22 creuse à section fermée et délimitée d'un côté par une paroi 23 sensiblement plane.

Cette paroi 23 est prolongée, sur chacun de ses bords latéraux, par une feuillure, respectivement 24 et 25, d'appui ou de fixation des éléments adjacents de la carrosserie.

La feuillure 24 comporte une découpe 26 de centrage du montant central 30 et la partie centrale 22 du profilé 21 comporte, au-dessous de cette découpe 26, une lumière 27 de positionnement du montant central 30.

Par ailleurs, la feuillure 25 est munie, dans sa partie avant et dans sa partie arrière, d'une découpe respectivement 28 et 29 de centrage d'un organe de levage du véhicule.

La paroi 23 du profilé 21 est de préférence placée du côté de l'habitacle du véhicule et le profilé 21 est réalisé par profilage ou hydroformage ou extrusion.

Par ailleurs, les feuillures 24 et 25 du profilé 21 sont fixées sur les éléments adjacents de la carrosserie comme par exemple le châssis en acier, par des rivets.

Le longeron de bas de caisse 20 formé d'une seule pièce présente donc un poids réduit par rapport aux longerons classiques qui sont généralement composés de plusieurs pièces assemblées les unes aux autres, tout en ayant une rigidité optimale lors d'un choc.

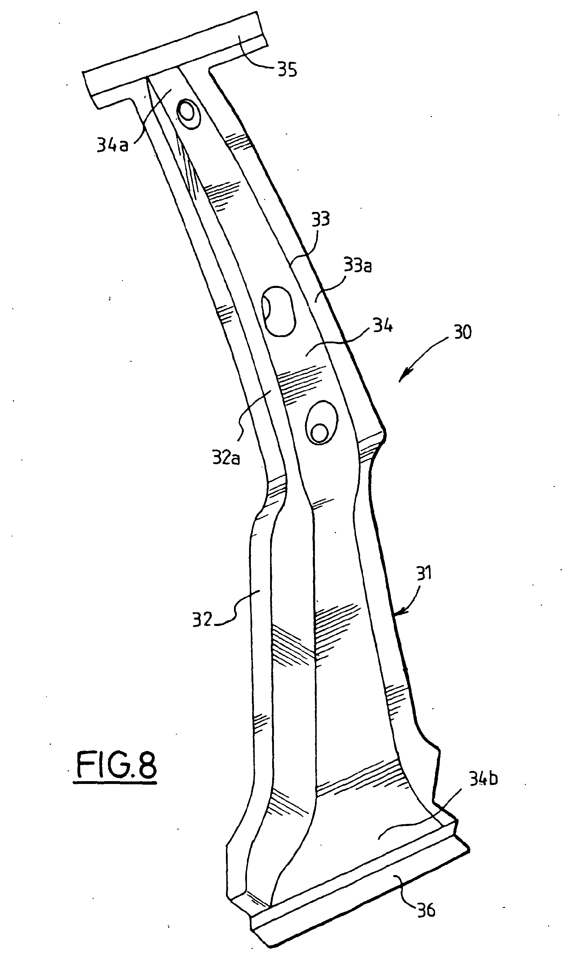

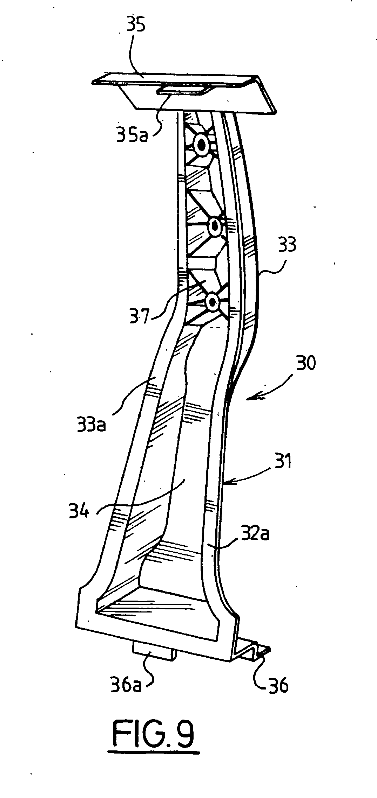

En se reportant aux Figs. 8 et 9, on va décrire le montant central 30.

Ce montant central 30 est formé par une pièce 31 monobloc en aluminium ou ses alliages réalisée par fonderie à pression sous vide et fixée respectivement sur l'arc de pavillon 10 et le longeron 20.

La pièce 31 monobloc a une section transversale en forme de U comportant deux branches latérales, respectivement 32 et 33, et une branche centrale 34.

La branche centrale 34 est prolongée à l'une de ses extrémités 34a par une semelle 35 de fixation sur l'arc de pavillon 10 et à l'autre de ses extrémités 34b par une semelle 36 de fixation sur le longeron 20.

Chaque branche latérale 32 et 33 est prolongée par un rebord, respectivement 32a et 33a, formant une surface d'appui de l'élément de carrosserie adjacent.

Ainsi que représenté sur les Figs. 8 et 9, la section transversale de la pièce 31 varie sur sa longueur et notamment croît de l'extrémité 34a fixée sur l'arc de pavillon10 jusqu'à l'extrémité 34b fixée sur le longeron 20.

Comme représenté à la Fig. 9, la semelle 35 comporte sur sa face interne une patte 35a de positionnement dans la lumière 15 de l'arc de pavillon 10 et la semelle 36 comporte sur sa face interne une patte 36a de positionnement dans la lumière 27 du longeron 20.

Par ailleurs, la pièce 31 est munie dans le creux du U de nervures de rigidification 37, ainsi que représentées à la Fig. 4.

La branche centrale 34 est munie de points de fixation par exemple d'un enjoliveur extérieur, des charnières inférieure et supérieure de la porte et d'une ceinture de sécurité.

Le fait de réaliser la pièce 31 monobloc par fonderie permet de pouvoir optimiser les épaisseurs du montant central 30 afin de répondre aux différents critères de poids et de résistance à un choc latéral.

La pièce monobloc 31 du montant central 30 est fixée sur l'arc de pavillon 10 et le longeron 20 du côté de l'habitacle du véhicule par des points de soudure réalisés par un procédé de soudage de type MIG.

Le montrant central formé d'une seule pièce présente donc un poids réduit par rapport aux montants classiques, tout en ayant une rigidité de déformation optimale lors d'un choc.

## Revendications

1. Flanc de carrosserie de véhicule automobile, du type comprenant au moins une ouverture (2) délimitée par un arc de pavillon (10), un longeron de bas de caisse (20) et un montant central (30), **caractérisé en ce que** l'arc de pavillon (10), le longeron (20) et le montant central (30) sont formés chacun par une pièce (11 ; 21 ; 31) monobloc en aluminium ou ses alliages et **en ce que** le montant central (30) est fixé directement sur l'arc de pavillon (10) et le longeron (20) et l'arc de pavillon (10) et le longeron (20) sont fixés directement sur des éléments adjacents de la carrosserie du véhicule.

2. Flanc de carrosserie selon la revendication 1, **caractérisé en ce que** la pièce monobloc de l'arc de pavillon (10) est formée par un profilé (11) obtenu par hydroformage et présentant des portions de section variable en fonction de la rigidité à obtenir dans des zones déterminées.

3. Flanc de carrosserie selon la revendication 2, **caractérisé en ce que** le profilé (11) est cintré et comporte une partie centrale (12) creuse à section fermée et bordée de deux feuillures (13,14) d'appui ou de fixation des éléments adjacents de la carrosserie.

4. Flanc de carrosserie selon la revendication 2 ou 3, **caractérisé en ce que** l'une (12a) des parois de la partie centrale (12) du profilé (11) comporte une lumière (15) de positionnement du montant central (30).

5. Flanc de carrosserie selon la revendication 2 ou 3, **caractérisé en ce que** les deux parois (12a, 12b) opposées de la partie centrale (12) du profilé (11) comportent , à leur extrémité avant, chacune une lumière (16, 17) de positionnement des éléments adjacents de la carrosserie.

6. Flanc de carrosserie selon l'une quelconque des revendications 2 à 5, **caractérisé en ce que** l'une (12a) des parois de la partie centrale (12) du profilé (11) est prolongée à son extrémité arrière par une semelle (18) munie d'une lumière (19) de positionnement d'un élément adjacent de la carrosserie.

7. Flanc de carrosserie selon la revendication 3, **caractérisé en ce que** les feuillures (13, 14) du profilé (11) sont fixées sur lesdits éléments par des points de soudure réalisés au moyen d'un faisceau laser.

8. Flanc de carrosserie selon la revendication 1, **caractérisé en ce que** la pièce monobloc du longeron de bas de caisse (20) est formée par un profilé (21) présentant, sur sa longueur, des portions d'épaisseur variable en fonction de la rigidité à obtenir dans des zones déterminées.

9. Flanc de carrosserie selon la revendication 8, **caractérisé en ce que** le profilé (21) comporte une partie centrale (22) creuse à section fermée et délimitée d'un côté par une paroi (23) sensiblement plane prolongée, sur chacun de ses bords latéraux, par une feuillure (24, 25) d'appui ou de fixation des éléments adjacents de la carrosserie.

10. Flanc de carrosserie selon la revendication 8 ou 9, **caractérisé en ce que** l'une (24) des feuillures comporte une découpe centrale (26) de centrage du montant central (30).

11. Flanc de carrosserie selon l'une quelconque des revendications 8 à 10, **caractérisé en ce que** la partie centrale (22) du profilé (21) comporte, au-dessous de la découpe (26), une lumière (27) du positionnement du montant central (30).

12. Flanc de carrosserie selon l'une quelconque des revendications 8 à 11, **caractérisé en ce que** l'autre (25) desdites feuillures comporte, dans sa partie avant et dans sa partie arrière, une découpe (28, 29) de centrage d'un organe de levage du véhicule.

13. Flanc de carrosserie selon l'une quelconque des revendications 8 à 12, **caractérisé en ce que** les feuillures (24, 25) du profilé (21) sont fixées sur lesdits éléments par des rivets.

14. Flanc de carrosserie selon l'une quelconque des revendications 8 à 13, **caractérisé en ce que** le profilé (21) est réalisé par profilage ou hydroformage ou extrusion.

15. Flanc de carrosserie selon la revendication 1, **caractérisé en ce que** la pièce monobloc du montant central (30) est réalisée par fonderie et présente une section transversale en forme de U comportant deux branches latérales (32, 33) et une branche centrale (34) prolongée à chaque extrémité par une semelle (35, 36) de fixation respectivement sur l'arc de pavillon (10) et le longeron (20).

16. Flanc de carrosserie selon la revendication 15, **caractérisé en ce que** chaque branche latérale (32, 33) est prolongée par un rebord (32a, 33a) s'étendant sensiblement perpendiculairement à ladite branche (32, 33).

17. Flanc de carrosserie selon la revendication 15, **caractérisé en ce que** la section transversale de la pièce monobloc (31) du montant central (30) varie sur sa longueur.

18. Flanc de carrosserie selon la revendication 17, **caractérisé en ce que** ladite section transversale croît de l'extrémité (34a) de ladite pièce (31) fixée sur l'arc de pavillon (10) jusqu'à l'extrémité (34b) fixée sur le longeron (20).

19. Flanc de carrosserie selon l'une quelconque des revendications 15 à 18, **caractérisé en ce que** la pièce (31) monobloc du montant central (30) est fixée sur l'arc de pavillon (10) et le longeron (20) du côté de l'habitacle du véhicule.

20. Flanc de carrosserie selon l'une quelconque des revendications 15 à 19, **caractérisé en ce que** la semelle (35 ; 36) de la pièce (31) monobloc du montant central (30) est fixée sur l'arc de pavillon (10) et sur le longeron (20) par les points de soudure réalisés par un procédé de soudage de type MIG.

## Claims

1. An automotive vehicle body side of the type comprising at least one opening (2) bounded by a roof arch (10), a bottom side frame (20) and a central pillar (30), **characterized in that** the roof arch (10), the side frame (20) and the central pillar (30) are each formed by a one-piece part (11; 27; 31) made of aluminium or alloys thereof, and **in that** the central pillar (30) is fixed directly onto the roof arch (10) and the side frame (20), and the roof arch (10) and the side frame (20) are fixed directly onto adjacent members of the vehicle bodywork.

2. A body side according to claim 1, **characterized in that** the one-piece part of the roof arch (10) is formed by a section (11) obtained by hydroforming and having portions of variable cross-section according to the rigidity to be obtained in specific zones.

3. A body side according to claim 2, **characterized in that** the section (11) is curved and has a hollow central part (12) of closed section bordered by two rebates (13, 14) for support or fixing of the adjacent members of the bodywork.

4. A body side according to claim 2 or 3,
**characterized in that** one (12a) of the walls of the central part (12) of the section (11) has an aperture (15) for positioning the central pillar (30).

5. A body side according to claim 2 or 3,
**characterized in that** the two opposed walls (12a, 12b) of the central part (12) of the section (11) each have at their forward end an aperture (16, 17) for positioning of the adjacent members of the bodywork.

6. A body side according to any one of claims 2 to 5, **characterized in that** one (12a) of the walls of the central part (12) of the section (11) is extended at its rearward end by a flange (18) provided with an aperture (19) for positioning an adjacent member of the bodywork.

7. A body side according to claim 3, **characterized in that** the rebates (13, 14) of the section (11) are fixed onto said members by weld spots produced by means of a laser beam.

8. A body side according to claim 1, **characterized in that** the one-piece part of the bottom side frame (20) is formed by a section (21) having, over its length, portions of variable thickness according to the rigidity to be obtained in specific zones.

9. A body side according to claim 8, **characterized in that** the section (21) has a hollow central part (22) of closed section bounded on one side by a substantially plane wall (23) extended, on each of its lateral edges, by a rebate (24, 25) for support or fixing of the adjacent members of the bodywork.

10. A body side according to claim 8 or 9,
**characterized in that** one (24) of the rebates has a central cut-away portion (26) for centring the central pillar (30).

11. A body side according to any one of claims 8 to 10, **characterized in that** the central part (22) of the section (21) has, below the cut-away portion (26), an aperture (27) for positioning the central pillar (30).

12. A body side according to any one of claims 8 to 11, **characterized in that** the other (25) of said rebates has, in its forward part and in its rearward part, a cut-away portion (28, 29) for centring a device for lifting of the vehicle.

13. A body side according to any one of claims 8 to 12, **characterized in that** the rebates (24, 25) of the section (21) are fixed onto said members by rivets.

14. A body side according to any one of claims 8 to 13, **characterized in that** the section (21) is produced by forming or hydroforming or extrusion.

15. A body side according to claim 1, **characterized in that** the one-piece part of the central pillar (30) is produced by casting technique and has a U-shaped cross-section comprising two lateral webs (32, 33) and a central web (34) extended at each end by a flange (35, 36) for fixing respectively onto the roof arch (10) and the side frame (20).

16. A body side according to claim 15, **characterized in that** each lateral web (32, 33) is extended by a flange (32a, 33a) extending substantially perpendicularly to said web (32, 33).

17. A body side according to claim 15, **characterized in that** the cross-section of the one-piece part (31) of the central pillar (30) varies over its length.

18. A body aide according to claim 17, **characterized in that** said cross-section increases from the end (34a) of said part (31) fixed onto the roof arch (10) to the end (34b) fixed to the side frame (20).

19. A body side according to any one of claims 15 to 18, **characterized in that** the one-piece part (31) of the central pillar (30) is fixed onto the roof arch (10) and the side frame (20) on the passenger compartment side of the vehicle.

20. A body side according to any one of claims 15 to 19, **characterized in that** the flange (35; 36) of the one-piece part (31) of the central pillar (30) is fixed onto the roof arch (10) and to the side frame (20) by weld spots produced by a MIG-type welding process.

## Patentansprüche

1. Karosserieseitenteil eines Kraftfahrzeugs des Typs, der wenigstens eine Öffnung (2) aufweist, die durch einen Dachbogen (10), einen Karosserieboden-Längsträger (20) und eine Mittelsäule (30) begrenzt ist, **dadurch gekennzeichnet, dass** der Dachbogen (10), der Längsträger (20) und die Mittelsäule (30) jeweils aus einem einstückigen Teil (11; 21; 31) aus Aluminium oder seinen Legierungen gebildet sind, und **dadurch**, dass die Mittelsäule (30) direkt an dem Dachbogen (10) und dem Längsträger (20) befestigt ist und der Dachbogen (10) und der Längsträger (20) direkt auf benachbarten Karosserieelementen des Fahrzeugs befestigt sind.

2. Karosserieseitenteil nach Anspruch 1, **dadurch gekennzeichnet, dass** das einstückige Teil des Dachbogens (10) durch ein Profil (11) gebildet ist, das durch Hydroforming erhalten wird und Abschnitte mit einem Querschnitt aufweist, der abhängige von der Steifigkeit variabel ist, die in den bestimmten Bereichen erzielt werden soll.

3. Karosserieseitenteil nach Anspruch 2, **dadurch gekennzeichnet, dass** das Profil (11) rundgebogen ist und einen hohlen, einen geschlossenen Querschnitt aufweisenden mittleren Teil (12) aufweist, der von zwei Falzen (13, 14) zum Stützen oder zur Befestigung der benachbarten Karosserieelemente eingefasst ist.

4. Karosserieseitenteil nach Anspruch 2 oder 3, **dadurch gekennzeichnet, dass** eine (12a) der Wände des mittleren Teils (12) des Profils (11) eine Öffnung (15) zur Positionierung der Mittelsäule (30) aufweist.

5. Karosserieseitenteil nach Anspruch 2 oder 3, **dadurch gekennzeichnet, dass** die beiden einander gegenüberliegenden Wände (12a, 12b) des mittleren Teils (12) des Profils (11) an ihrem vorderen Ende jeweils eine Öffnung (16, 17) zur Positionierung der benachbarten Karosserieelemente aufweisen.

6. Karosserieseitenteil nach einem der Ansprüche 2 bis 5, **dadurch gekennzeichnet, dass** eine (12a) der Wände des mittleren Teils (12) des Profils (11) an ihrem rückwärtigen Ende durch einen Flansch (18) verlängert ist, der mit einer Öffnung (19) zur Positionierung eines benachbarten Karosserieelements ausgestattet ist.

7. Karosserieseitenteil nach Anspruch 3, **dadurch gekennzeichnet, dass** die Falze (13, 14) des Profils (11) an den Elementen durch Schweißpunkte befestigt sind, die mittels eines Laserstrahls hergestellt wurden.

8. Karosserieseitenteil nach Anspruch 1, **dadurch gekennzeichnet, dass** das einstückige Teil des Karosserieboden-Längsträgers (20) aus einem Profil (21) gebildet ist, das über seine Länge Abschnitte mit einer Dicke aufweist, die abhängig von der Steifigkeit variabel ist, die in den bestimmten Bereichen erzielt werden soll.

9. Karosserieseitenteil nach Anspruch 8, **dadurch gekennzeichnet, dass** das Profil (21) einen hohlen, einen geschlossenen Querschnitt aufweisenden mittleren Teil (22) aufweist, der auf einer Seite durch eine im Wesentlichen ebene verlängerte Wand (23) und an jedem seiner Seitenränder durch einen Falz (24, 25) zum Stützen oder zur Befestigung der benachbarten Karosserieelemente begrenzt wird.

10. Karosserieseitenteil nach Anspruch 8 oder 9, **dadurch gekennzeichnet, dass** einer (24) der Falze eine zentrale Ausnehmung (26) zum Zentrieren der Mittelsäule (30) aufweist.

11. Karosserieseitenteil nach einem der Ansprüche 8 bis 10, **dadurch gekennzeichnet, dass** der mittlere Teil (22) des Profils (21) unter der Ausnehmung (26) eine Öffnung (27) zur Positionierung der Mittelsäule (30) aufweist.

12. Karosserieseitenteil nach einem der Ansprüche 8 bis 11, **dadurch gekennzeichnet, dass** der andere (25) der Falze in seinem vorderen Teil und in seinem rückwärtigen Teil eine Ausnehmung (28, 29) zum Zentrieren einer Hebeeinrichtung für das Fahrzeug aufweist.

13. Karosserieseitenteil nach einem der Ansprüche 8 bis 12, **dadurch gekennzeichnet, dass** die Falze (24, 25) des Profils (21) an den Elementen durch Niete befestigt sind.

14. Karosserieseitenteil nach einem der Ansprüche 8 bis 13, **dadurch gekennzeichnet, dass** das Profil (21) durch Profilierung oder Hydroforming oder Extrudieren hergestellt ist.

15. Karosserieseitenteil nach Anspruch 1, **dadurch gekennzeichnet, dass** das einstückige Teil der Mittelsäule (30) durch Gießen hergestellt ist und in Querrichtung einen U-förmigen Querschnitt aufweist, der zwei seitliche Arme (32, 33) und einen mittleren Arm (34) umfasst, der an jedem Ende durch einen Flansch (35, 36) für die jeweilige Befestigung am Dachbogen (10) und am Längsträger (20) verlängert ist.

16. Karosserieseitenteil nach Anspruch 15, **dadurch gekennzeichnet, dass** jeder seitliche Arm (32, 33) durch einen umgebogenen Abschnitt (32a, 33a) verlängert wird, der sich im Wesentlichen senkrecht zu dem Arm (32, 33) erstreckt.

17. Karosserieseitenteil nach Anspruch 15, **dadurch gekennzeichnet, dass** der Querschnitt in Querrichtung des einstückigen Teils (31) der Mittelsäule (30) sich über ihre Länge ändert.

18. Karosserieseitenteil nach Anspruch 17, **dadurch gekennzeichnet, dass** der Querschnitt in Querrichtung von dem Ende (34a) des Teils (31), das an dem Dachbogen (10) befestigt ist, bis zu dem Ende (34b), das an dem Längsträger (20) befestigt ist, zunimmt.

19. Karosserieseitenteil nach einem der Ansprüche 15 bis 18, **dadurch gekennzeichnet, dass** das einstückige Teil (31) der Mittelsäule (30) an dem Dachbogen (10) und dem Längsträger (20) auf der Seite der Fahrgastzelle des Fahrzeugs befestigt ist.

20. Karosserieseitenteil nach einem der Ansprüche 15 bis 19, **dadurch gekennzeichnet, dass** der Flansch (35; 36) des einstückigen Teils (31) der Mittelsäule (30) an dem Dachbogen (10) und dem Längsträger (20) durch Schweißpunkte befestigt ist, die durch ein MIG-Schweißverfahren hergestellt wurden.
